**Europäisches Patentamt**

**European Patent Office**

**Office européen des brevets**

(19)

(11) Veröffentlichungsnummer : **0 420 816 B1**

## (12) EUROPÄISCHE PATENTSCHRIFT

(45) Veröffentlichungstag der Patentschrift :
**25.05.94 Patentblatt 94/21**

(21) Anmeldenummer : **90810727.9**

(22) Anmeldetag : **20.09.90**

(30) Priorität : **29.09.89 CH 3550/89**

(43) Veröffentlichungstag der Anmeldung :
**03.04.91 Patentblatt 91/14**

(45) Bekanntmachung des Hinweises auf die
Patenterteilung :
**25.05.94 Patentblatt 94/21**

(84) Benannte Vertragsstaaten :
**CH DE FR GB IT LI**

(56) Entgegenhaltungen :
**EP-A- 0 312 499**
**CH-A- 631 554**
**FR-A- 2 451 049**
**FR-A- 2 515 370**
**US-A- 4 092 067**

(51) Int. Cl.⁵ : **G03B 27/73**

(54) **Belichtungssteuerungsverfahren und fotografisches Farbkopiergerät.**

(73) Patentinhaber : **GRETAG IMAGING AG**
**Althardstrasse 70**
**CH-8105 Regensdorf (CH)**

(72) Erfinder : **Frick, Beat, Dr.**
**Rosengartenstrasse 5**
**CH-8107 Buchs (CH)**
Erfinder : **Kraft, Walter, Dr.**
**Appenzellerstrasse 57**
**CH-8049 Zürich (CH)**

(74) Vertreter : **Kleewein, Walter, Dr. et al**
**Patentabteilung**
**CIBA-GEIGY AG**
**Postfach**
**CH-4002 Basel (CH)**

EP 0 420 816 B1

## Beschreibung

Die Erfindung betrifft ein Verfahren zur Steuerung der Belichtung in einem fotografischen Farbkopiergerät gemäss Oberbegriff des Patentanspruchs 1 sowie ein fotografisches Farbkopiergerät gemäss Oberbegriff des Patentanspruchs 8.

Zur Ermittlung der optimalen Belichtungszeiten bzw. Kopierlichtmengen in einem fotografischen Farbkopiergerät werden die Farbdurchlässigkeiten oder Farbdichten einerKopiervorlage in den drei Grundfarben bestimmt. Dabei ist es nötig, die spektrale Empfindlichkeit der Messanordnung möglichst genau an die spektrale Empfindlichkeit des verwendeten Kopiermaterials anzugleichen. Diese Forderungergibt sich aus der Erfahrung, dass bei Abweichungen der spektralen Empfindlichkeiten der Messanordnung und des Kopiermaterials ein Anstieg in der Dichte in einer Farbe der Kopiervorlage nicht zu einer entsprechenden Aenderung in derKopierlichtmenge führt und so eine Farbverfälschung eintreten kann, und ist z.B. auch in der Publikation von R.W.G. Hunt, "The Reproduction of Colour", S. 284 angesprochen.

Aus der US-A-4,589,766 ist ein fotografisches Farbkopiergerät bekannt, bei dem dieser Forderung mit Hilfe spezieller optischer Messfilter zu genügen versucht wird. Der Nachteil dieser Methode zeigt sich spätestens dann, wenn mit unterschiedlichem Kopiermaterial, beispielsweise mit matter oder mit glänzender Oberfläche, gearbeitet wird. Bei jedem Wechsel des Kopiermaterials müssen neue, an die geänderten spektralen Empfindlichkeiten des Kopiermaterials angepasste Messfilter eingesetzt werden, was den Aufwandbeträchtlich erhöht und zusätzliche Rüstzeiten erfordert. Ueberdies sind derartige Messfilter wegen der erforderlichen extremen Präzision nur sehr schwer herstellbar und entsprechend teuer. Ein weiterer zusätzlicher Aufwand entsteht durch das logistische Management der verschiedenen an die spektralen Empfindlichkeiten des Kopiermaterials angepassten Messfilter. Ausserdem ist man durch die Wahl eines bestimmten Satzes von Messfiltern meist auch an eine bestimmte Sorte eines bestimmten Herstellers von Kopiermaterial gebunden.

In der EP-A-0,312,499 sind ein Verfahren und eine Vorrichtung zur Steuerung der Belichtung in einem fotografischen Farbkopiergerät beschrieben, bei dem das von jedem Abtastbereich der Kopiervorlage kommende Messlicht spektrometrisch zerlegt wird. Die auf diese Weise erhaltenen Messwerte werden dann zu den jeweiligen Farbauszugswerten verknüpft und daraus die erforderlichen Kopierlichtmengen bestimmt. Während dieses Verfahren eine sehr exakte Analyse der jeweiligen Kopiervorlage erlaubt, stellen die grossen anfallenden Datenmengen sehr hohe Anforderungen an die Kapazität und die Geschwindigkeit der nachgeschalteten Auswerteeinheiten.

In der FR-A-2,451,049 ist ein Farbkopiergerät beschrieben, das eine Projektionsanordnung zum Abbilden von Kopiervorlagen auf lichtempfindliches Kopiermaterial, eine Messanordnung zur bereichsweisen fotoelektrischen Abtastung der Kopiervorlagen und zur Bestimmung von an die spektralen Empfindlichkeitsverläufe des Kopiermaterials angepassten Farbauszugswerten, und eine Belichtungssteuerungsanordnung umfasst, welche die Farbauszugswerte zur Festlegung der erforderlichen Kopierlichtmengen weiterverarbeitet. Zur Ermittlung der optimalen Kopierlichtmengen wird durch die Auswertung von zuvor auf das noch nicht entwickelte Filmmaterial aufbelichteten Testfeldern in den drei Grundfarben Gelb, Purpur und Blaugrün das Transmissionsverhalten des Filmmaterials und damit die jeweilige Filmsorte festgestellt. Dazu werden die Testfelder mit Hilfe von Filtern in jeder der Grundfarben in zwei eng benachbarten spektralen Bereichen ausgemessen, die Verhältnisse der ermittelten Transmissionen gebildet. Aus dem Vergleich der Messdaten mit den abgespeicherten Absorptionsdaten bekannter Filme kann die Filmsorte bestimmt werden. Je nach Filmsorte fliessen dann bei der Bestimmung der erforderlichen Kopierlichtmengen filmtypspezifische Korrekturwerte mit ein. Das Verfahren ist relativ aufwendig und erfordert es, auf den noch nicht entwickelten Film Testfelder aufzubelichten.

Durch die Erfindung, wie sie in den Patentansprüchen 1 und 8 definiert ist, werden diese Nachteile behoben und die Aufgabe gelöst, die für die richtige Belichtungssteuerung massgeblichen Farbauszugswerte an das jeweilige verwendete Kopiermaterial angepasst zu ermitteln, ohne dabei die optischen Messfilter wechseln zu müssen. Die erfindungsgemässe Lösung ist überdies konstruktiv relativ einfach und kostengünstig zu bewerkstelligen.

Bevorzugte Varianten, Weiterbildungen und vorteilhafte Ausbildungsformen sind Gegenstand der abhängigen Patentansprüche.

Im folgenden wird die Erfindung in verschiedenen Ausführungsbeispielen anhand der Zeichnung näher erläutert. Es zeigen:

| Fig. 1 | eine Prinzipskizze des erfindungsgemässen fotografischen Farbkopiergerätes, |
| Fig. 2 | die in Fig. 1 gesamthaft mit 4 bezeichnete Messanordnung, |
| Fig. 3 | ein Abtastmuster einer Kopiervorlage, |
| Fig. 4 | eine schematische Seitenansicht einer Variante der wellenlängenselektiven Detektionseinrichtung der Messanordnung, |

Fig. 5            eine Aufsicht der Detektoranordnung aus Fig. 4,

Fig. 6            die wellenlängenselektive Detektionseinrichtung gemäss dem Ausführungsbeispiel der Messanordnung in Fig. 2,

Fig. 7            ein weiteres Ausführungsbeispiel der wellenlängenselektiven Detektionseinrichtung,

Fig. 8            eine weitere Variante der wellenlängenselektiven Detektionseinrichtung und

Fig. 9 - Fig. 13            Diagramme zur Erläuterung des erfindungsgemässen Verfahrens.

Das erfindungsgemässe fotografische Farbkopiergerät umfasst im wesentlichen zwei Stationen, welche von einer vorzugsweise streifenförmigen Kopiervorlage N hintereinander durchlaufen werden. Die Transportrichtung ist durch den Pfeil F angedeutet. In der ersten Station erfolgt die Abtastung der Kopiervorlage N, und in der zweiten Station wird die Kopiervorlage N auf lichtempfindliches Kopiermaterial P abgebildet.

Mit Ausnahme der noch zu erklärenden Unterschiede in der Messanordnung der ersten Station ist das fotografische Farbkopiergerät aufgebaut wie herkömmliche Geräte dieser Art, beispielsweise etwa die aus den US-PS Nr. US-A-4,092,067, US-A-4,101,216 und US-A-4,279,505 bekannten. In Fig. 1 sind daher auch nur die wesentlichen, für das Verständnis der Erfindung notwendigen Komponenten eines solchen Farbkopiergerätes dargestellt. Es umfasst eine Kopierlichtquelle 1, einen Satz servogesteuerter Farbfilter 2 oder ähnliches, eine Abbildungsoptik 3, eine eine Messlichtquelle und fotoelektrische Detektoren beinhaltende Messanordnung 4 und eine Rechen- und Steuereinheit 5, 5a für die Belichtungssteuerung.

Footografische Farbkopiergeräte dieses prinzipiellen Aufbaus sind beispielsweise die weltweit eingesetzten Hochleistungsprinter Modelle 3139, 3140, 3141 oder 3142 der Anmelderin. Bei den genannten Hochleistungsprintern erfolgt die Ausmessung der Kopiervorlage N bereichsweise, beispielsweise mit einer Auflösung von rund 100 Abtastbereichen A (Punkten) je Vorlage und mehr. Jeder Abtastbereich A wird in die drei Grundfarben Rot R, Grün G und Blau B zerlegt und ein Messwerttripel, die drei sogenannten Farbauszugswerte für die Grundfarben bestimmt, die näherungsweise den spektralen Empfindlichkeiten des Kopiermaterials P entsprechen. Diese etwa 300 Farbauszugswerte werden dann auf an sich bekannte Weise nach verschiedenen Kriterien zur Bestimmung der erforderlichen Kopierlichtmengen ausgewertet und danach die Belichtung des lichtempfindlichen Kopiermaterials P gesteuert.

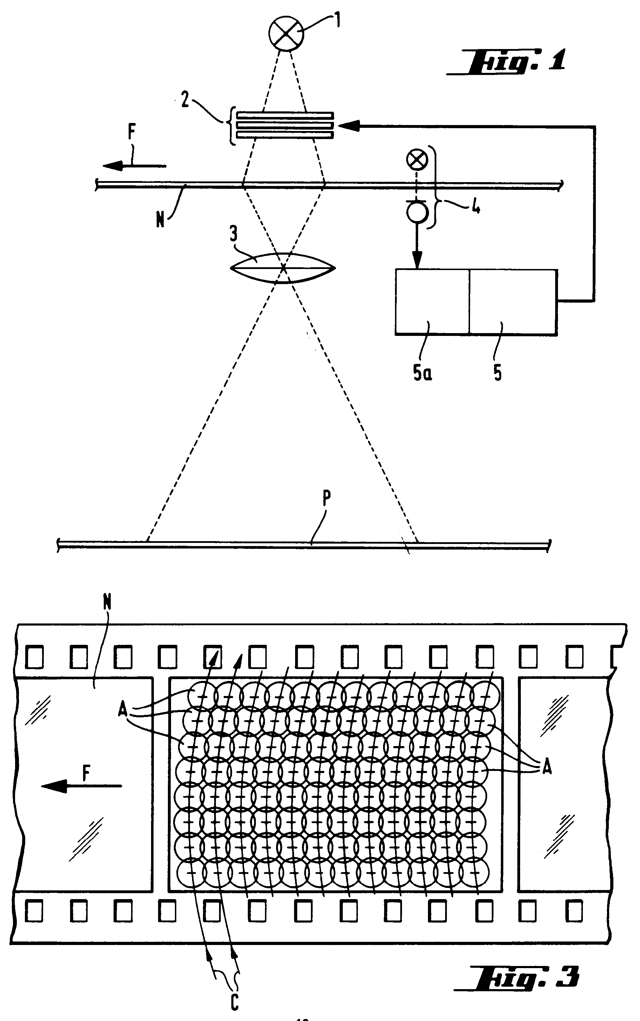

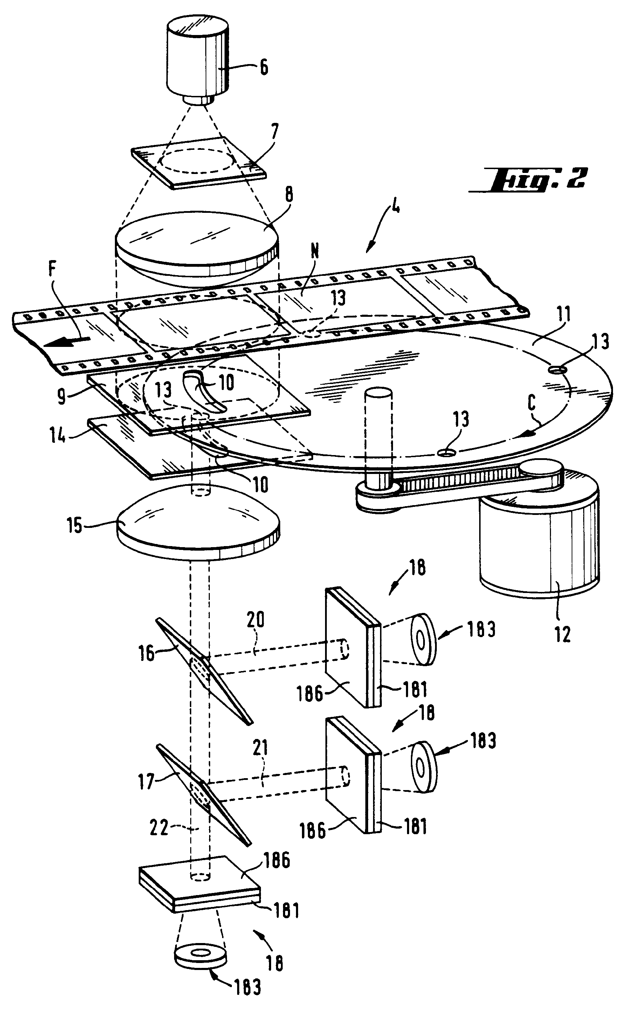

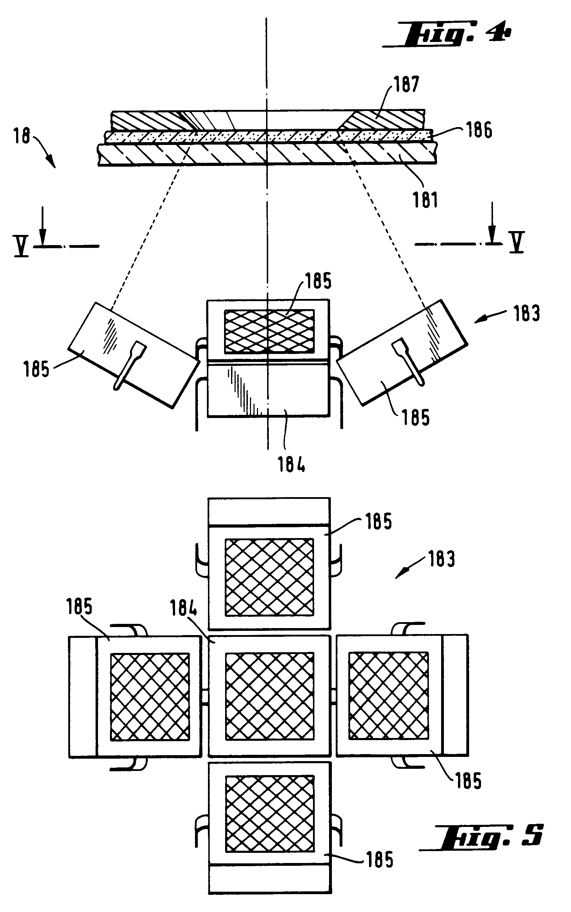

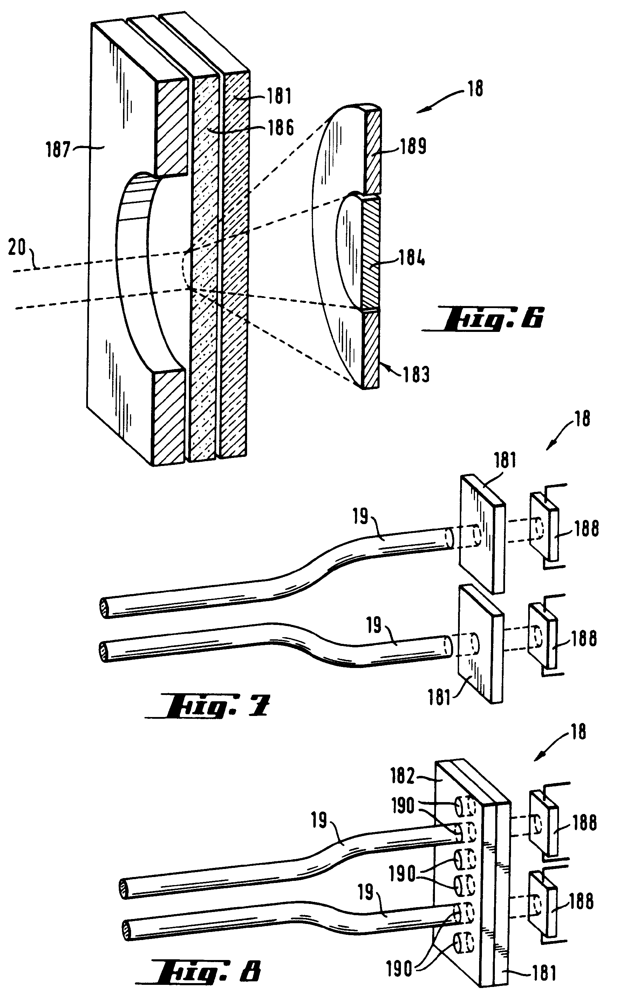

In Fig. 2 ist die gesamthaft mit 4 bezeichnete erfindungsgemässe Messanordnung dargestellt. Die Kopiervorlage N befindet sich im Strahlengang einer Messlichtquelle 6. Unmittelbar nach der Messlichtquelle 6 ist ein Vorfilter 7 angeordnet, um die spektrale Zusammensetzung des Messlichtes den Bedürfnissen anzupassen. Das Messlicht gelangt durch eine erste Kondensorlinie 8 auf die Kopiervorlage N. Unterhalb der Kopiervorlage N ist die eigentliche Abtastvorrichtung angeordnet. Diese umfasst eine Abtastscheibe 11 mit Oeffnungen 13, die zwischen zwei zueinander parallelen Schlitzblenden 9 und 14 in Richtung des Pfeiles R rotierbar angeordnet ist. Als Antrieb für die Abtastscheibe 11 dient ein Motor 12. Die Schlitzblenden 9 und 14 weisen jeweils einen kreisbogenförmigen Schlitz 10 auf. Ueblicherweise sind die Schlitze 10 deckungsgleich übereinander angeordnet. Ihre gegenseitige Lage kann aber derart verändert werden, dass die effektive Schlitzlänge an das jeweilige Format der Kopiervorlage N (z.B. 135er Film oder 110er Film) angepasst ist. Die Breite der Schlitze 10 und ihre Krümmung ist auf die Oeffnungsdurchmesser und den Abstand der Oeffnungen 13 von der Rotationsachse der Abtastscheibe 11 abgestimmt. Im vorliegenden Ausführungsbeispiel weist die Abtastscheibe 11 vier Oeffnungen 13 auf, die in Richtung des Pfeiles R rotierend entlang der effektiven Schlitzlänge kurzfristig das Messlicht passieren lassen. Dadurch wird die Kopiervorlage in einzelne punktförmige Abtastbereiche A zerlegt. In Fig. 3 ist ein resultierendes typisches Abtastmuster einer Kopiervorlage dargestellt. Die Abtastbereiche A sind zeilenförmig aneinandergereiht. Jede Zeile verläuft etwa senkrecht zur Transportrichtung F. Der gegenüber der Transportrichtung F leicht zurückgeneigte Verlauf der Zeilen ist eine Folge der Ueberlagerung des Transportes in Richtung F der Kopiervorlage N und der Rotation R der Oeffnungen 13 der Abtastscheibe. Nach dem Durchtritt durch die Abtastvorrichtung gelangt das Messlicht durch eine zweite Kondensorlinse 15 auf einen teildurchlässigen Blauspiegel 16, der vorzugsweise unter etwa 45° zum Strahlengang geneigt angeordnet ist. Der blaue Anteil des Messlichtes wird von dem Blauspiegel 16 abgelenkt, für den übrigen Anteil des Messlichtes stellt er bloss eine durchlässige Glasplatte dar. Der übrige Anteil des Messlichtes gelangt schliesslich zu einem teildurchlässigen Rotspiegel 17, welcher den Rotanteil des Messlichtes ablenkt und nur den Grünanteil ungehindert passieren lässt. Vorzugsweise sind der Blau- und der Rotspiegel dichroitische Spiegel. Auf diese Weise wird das Messlicht in die drei Grundfarben Blau, Rot und Grün aufgespalten.

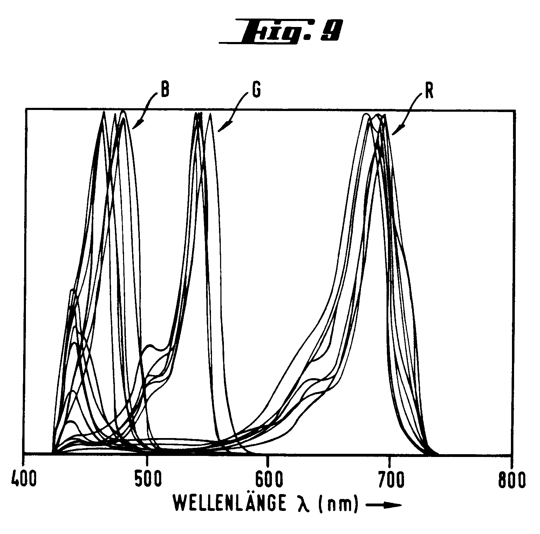

Im Strahlengang 20, 21, 22 jeder Grundfarbe (Blau B, Rot R und Grün G) ist eine wellenlängenselektive Detektionseinrichtung 18 angeordnet. Diese umfasst im vorliegenden Ausführungsbeispiel jeweils ein der Grundfarbe zugeordnetes Filter 181, das im wesentlichen senkrecht zum Strahlengang angeordnet ist, und eine fotoelektrische Detektoranordnung 183. Das Filter 181 ist ein Transmissions-Interferenzfilter, vorzugsweise ein dielektrischer Bandpass, dem eine Streuscheibe 186 vorgelagert ist. Zur Begrenzung der Messstrahlweite kann auch noch eine Lochblende 187 vorgesehen sein, wie in den Fig. 4 und 6 angedeutet.

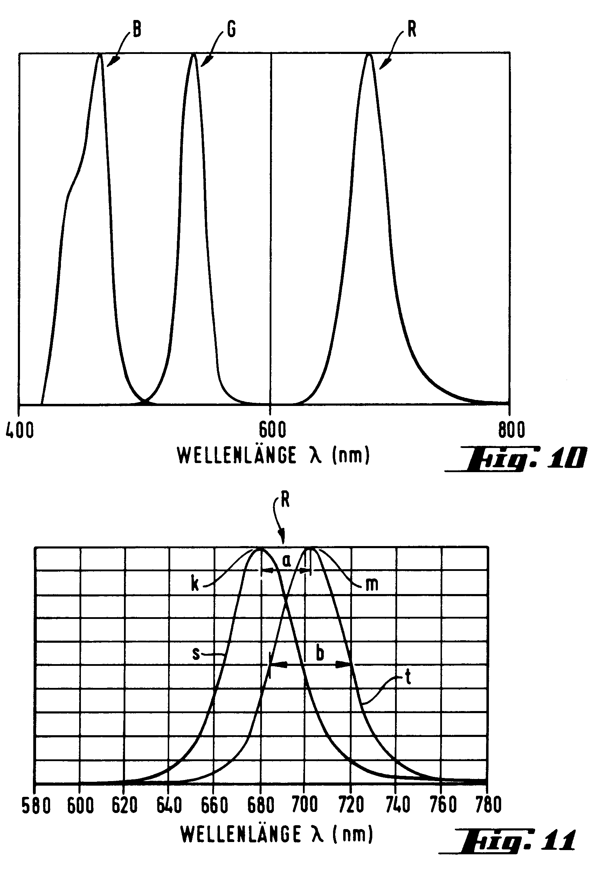

Die fotoelektrische Detektoranordnung 183 ist in den Fig. 4 bis 6 dargestellt. Gemäss den Fig. 4 und 5 umfasst die Detektoranordnung 183 beispielsweise fünf Einzeldetektoren, die in der Form eines Kreuzes angeordnet sind. Insbesondere ist ein zentraler Detektor 184 von vier peripheren Detektoren umgeben, die vorzugsweise mit ihrer Lichteintrittsfläche auf das Filter 181 hin geneigt angeordnet sind. Durch diese Anordnung der fotoelektrischen Detektoren schliessen die peripheren Detektoren 185 mit dem Strahlengang bzw. der Filternormalen einen anderen Winkel ein als der zentrale Detektor 184. Damit erfassen die periphären Detektoren 185 aber auch einen, gegenüber dem vom zentralen Detektor 184 erfassten, etwas verschobenen Spektralbereich innerhalb der jeweiligen Grundfarbe (Blau B, Grün G oder Rot R), da der spektrale Transmissionsverlauf des Interferenzfilters 181 grundsätzlich vom Winkel abhängig ist, unter dem das Messlicht erfasst wird. Insbesondere gilt, dass der spektrale Transmissionsverlauf des Interferenzfilters umso mehr in Richtung kurzer Wellenlängen verschoben ist, je grösser der Winkel zwischen dem Lichtstrahl und der Filternormalen ist. Ueblicherweise werden diese Spektralbereiche aber überlappen. Vorzugsweise ist die Anordnung der Detektoren derart, dass die von benachbarten Detektoren (184, 185) erfassten Intensitätsmaxima (k und m in Fig. 11) durch einen Abstand getrennt sind, der etwa der Halbwertsbreite (b in Fig. 11) des spektralen Transmissionsverlaufes des Interferenzfilters 181 entspricht. Der Abstand beträgt etwa 5-35 nm, vorzugsweise etwa 20 nm.

In Fig. 6 ist eine weitere Variante der Detektoranordnung 183 dargestellt. In diesem Ausführungsbeispiel ist der zentrale Detektor 184 kreisförmig ausgebildet. Als peripherer Detektor dient ein einziger ringförmig ausgebildeter fotoelektrischen Detektor 189, der den zentralen Detektor 184 umgibt.

Es versteht sich, dass die Detektoranordnung 183 nicht nur auf die in den Fig. 4 bis 6 dargestellten Ausführungsbeispiele beschränkt ist. Vielmehr könnten auch nur mindestens zwei nebeneinander angeordnete Einzeldetektoren vorgesehen sein, die jeweils einen anderen Winkelbereich des vom Filter 181 kommenden Messlichtkegels erfassen. Die Detektoranordnung 183 könnte aber auch derart ausgebildet sein, dass mehr als zwei konzentrische Winkelbereiche des vom Filter 181 kommenden Messlichtkegels erfasst werden. Beispielsweise könnten mehrere ringförmige Detektoren konzentrisch um einen zentralen Detektor gruppiert sein.

In den Fig. 7 und 8 sind zwei weitere Ausführungsbeispiele der wellenlängenselektiven Detektionseinrichtung 18 dargestellt. Im Strahlengang 20, 21 oder 22 jeder Grundfarbe (Fig. 2) sind Lichtleiter 19 angeordnet, in den dargestellten Beispielen die Mindestzahl von zwei Lichtleitern. Am Ausgang der Lichtleiter 19 ist jeweils die wellenlängenselektive Detektionseinrichtung 18 angeordnet. Diese umfasst im Ausführungsbeispiel nach Fig. 7 je Lichtleiter 19 ein eigenes Filter 181, vorzugsweise ein Transmissionsfilter und im Anschluss an jedes Filter einen Einzeldetektor 188. Vorzugsweise überlappen die Transmissionsverläufe benachbarter Filter 181. Die Transmissionsmaxima (k und m in Fig. 11) unmittelbar benachbarter Filter 181 sind durch einen Abstand getrennt, der etwa der Halbwertbreite (b in Fig. 11) der Transmissionverläufe der Filter 181 entspricht und etwa 5-35 nm, vorzugsweise etwa 20 nm, beträgt.

Im Ausführungsbeispiel nach Fig. 8 sind die Ausgänge der dargestellten mindestens zwei Lichtleiter 19 je Grundfarbe auf ein einzelnes Verlauffilter 181 gerichtet, welches vorzugsweise als Transmissionsfilter ausgebildet ist. Das Verlauffilter weist einen über seine Länge veränderlichen spektralen Transmissionsverlauf auf. Ausgehend von einem bestimmten Transmissionsverlauf im längerwelligen Bereich der jeweiligen Grundfarbe (Blau B, Grün G oder Rot R) verschiebt sich dieser über die Länge des Filter zu kürzeren Wellenlängen. Vorzugsweise ist das Verlauffilter als Interferenzfilter ausgebildet. Zwischen dem Filter 181 und den Lichtleitern 19 ist eine Steckplatte 182 angeordnet. Die Steckplatte 182 weist über ihre Länge mehrere, mindestens jedoch zwei Einsecköffnungen 190 auf. In diese Oeffnungen 190 sind die Lichtleiter 19 einsteckbar. Durch die Wahl der Einstecköffnungen 190 für die Lichtleiter 19 werden aus dem Verlauffilter bestimmte Bereiche mit definierten spektralen Transmissionsverläufen festgelegt.Vorzugsweise werden die Steckplätze für die Lichtleiter 19 derart gewählt, dass die Transmissionsverläufe benachbarter Bereiche auf dem Verlauffilter 181 überlappen. Hinter dem Verlauffilter sind fotoelektrische Detektoren 188 angeordnet, immer jeweils einer genau dem zugeordneten Lichtleiter 19 gegenüberliegend. Die Transmissionsmaxima (k und m in Fig. 11) unmittelbar benachbarter Bereiche sind durch einen Abstand a getrennt, der etwa der Halbwertsbreite (b in Fig. 11) der Transmissionsverläufe des Verlauffilters 181 entspricht. Ueblicherweise beträgt dieser Abstand etwa 5-35 nm, vorzugsweise etwa 20 nm. Hinter dem Verlauffilter sind Einzeldetektoren 188 derart im Strahlengang 20, 21 oder 22 der jeweiligen Grundfarbe angeordnet, dass sie jeweils einem der Lichtleiter 19 genau gegenüberliegen. Vorzugsweise bilden das Verlauffilter 181, die Steckplatte 182 und die Einzeldetektoren 188 eine Einheit. Sie können in einer gemeinsamen Halterung gefasst sein, sie können aber auch zu einem kompakten Block zusammengeklebt sein.

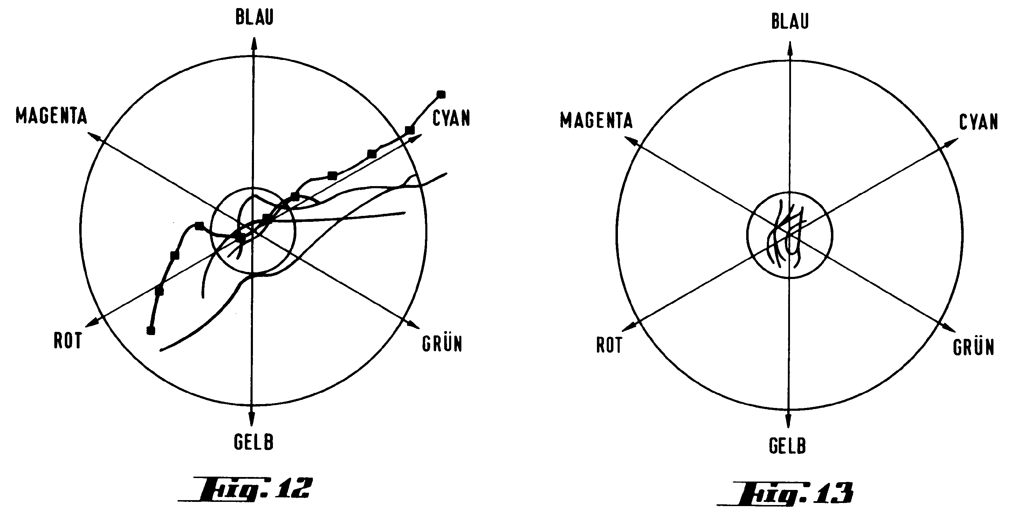

In den Ausführungsbeispielen gemäss den Fig. 7 und 9 sind Lichtleiter 19 dargestellt, um die separaten Filter bzw. die einzelnen Bereiche des Verlauffilters mit Messlicht zu beaufschlagen. Selbstverständlich ist dies aber auch ohne Lichtleiter 19 möglich, indem der von den jeweiligen Strahlteilerspiegel 16 oder 17 kommende Messstrahl durch Strahlteiler oder ähnliches in mehrere Teilstrahlen zerlegt wird. Die Filter 181 sind als Transmissionsfilter beschrieben, selbstverständlich könnten auch Reflexionsfilter oder andere wellenlängenselektive optische Elemente verwendet werden. Das erfindungsgemässe fotografische Farbkopiergerät ist auch nicht darauf eingeschränkt, dass im Strahlengang jeder Grundfarbe die gleiche Art von wellenlängenselektiver Detektionseinrichtung 18 angeordnet ist. Auch müssen die Detektoranordnungen 183 im Strahlengang 20, 21 oder 22 des Messlichtes in den Grundfarben Blau B, Grün G oder Rot R nicht gleich sein. Je nach den Erfordernissen und den spektralen Empfindlichkeiten der verwendeten Kopiermaterialien P können im Strahlengang des Messlichtes in jeder der drei Grundfarben andere wellenlängenselektive Detektionseinrichtungen 18 mit unterschiedlichen Detektoranordnungen 183, insbesondere was die Anzahl der Detektoren und somit der erfassten benachbarten spektralen Bereiche innerhalb jeder Grundfarbe betrifft, angeordnet sein.

Das Messlicht der Messlichtquelle 6 wird durch das Vorfilter 7 und die erste Kondensorlinse 8 auf die Kopiervorlage N geleitet. Durch die Kombination der Transportbewegung der Kopiervorlage N in Richtung des Pfeiles F, die Rotation der Abtastscheibe 11 gemäss des Pfeiles R und die sequentielle elektrische Messung wird die Kopiervorlage N bereichsweise (zeilenweise) abgetastet und in "punktförmige" Bereiche A zerlegt. Das von den einzelnen Abtastbereichen A kommende Messlicht wird über eine zweite Kondensorlinse 15 auf einen teildurchlässigen Blauspiegel 16 geleitet. Der Blauanteil des Messlichtes wird in Richtung der wellenlängenselektiven Detektionseinrichtung 18 für die Grundfarbe Blau abgelenkt. Der übrige Anteil des Messlichtes passiert den Blauspiegel ungehindert und wird schliesslich von einem Rotspiegel in die Grundfarben Rot und Grün aufgespalten. Die Rot- und Grünanteile des Messlichtes werden gleichfalls zu den ihnen zugehörigen wellenlängenselektiven Detektionseinrichtungen 18 geleitet. In den wellenlängenselektiven Detektionseinrichtungen 18 wird der Messlichtanteil in den Grundfarben Blau B, Grün G oder Rot R in mindestens zwei eng benachbarten spektralen Bereichen erfasst. Die auf diese Weise erhaltenen Messwerte werden daraufhin an die Steuer- und Recheneinheit 5, 5a weitergeleitet und dort zu dem jeweiligen Farbauszugswert verknüpft. Die Gesamtheit aller Farbauszugswerte (bei etwa 100 bis zu 1000 Abtastpunkten A je Grundfarbe etwa 300 bis 3000 Werte) werden anschliessend wieder auf an sich bekannte Weise nach verschiedenen Kriterien zur Bestimmung der Kopierlichtmengen ausgewertet und danach die Belichtung des lichtempfindlichen Kopiermaterials P gesteuert.

In Fig. 9 sind die spektralen Empfindlichkeiten von verschiedenen Kopiermaterialien P aufgetragen. Der Darstellung ist zu entnehmen, dass diese spektralen Empfindlichkeiten für die Grundfarben Blau B, Grün G und Rot R über einen relativ grossen Wellenlängenbereich streuen. Bezogen auf die Empfindlichkeitsmaxima beispielsweise der Grundfarbe Rot R, erstreckt sich der Streubereich über bis zu etwa 20 nm und mehr.

In Fig. 10 sind die Transmissionsverläufe üblicher Transmissionsfilter für die Grundfarben Blau B, Grün G und Rot R in einem Diagramm zusammengefasst. Ein Vergleich der Filtertransmissionsverläufe mit den spektralen Empfindlichkeiten der Kopiermaterialien P zeigt deutlich, dass derartige Filter in den wenigsten Fällen optimal an das verwendete Kopiermaterial angepasst sind.

Erfindungsgemäss werden nun innerhalb jeder Grundfarbe, gemäss Fig. 11 beispielsweise innerhalb der Grundfarbe Rot R mindestens zwei eng benachbarte spektrale Bereiche s, t detektiert. Ueblicherweise überlappen die erfassten spektralen Bereiche s,t. Die Maxima k, m unmittelbar benachbarter spektraler Bereiche s, t sind durch einen Abstand a getrennt, der etwa der Halbwertsbreite b des Verlaufes der spektralen Bereiche s, t entspricht. Dieser Abstand a beträgt etwa 5-35 nm, vorzugsweise etwa 20 nm. Die auf diese Weise (von jedem Abtastbereich für jede Grundfarbe) erhaltenen Messwerte $M_i$ werden von der Recheneinheit 5a zu den jeweiligen Farbauszugswerten $V_j$ verknüpft. Die Verknüpfung erfolgt beispielsweise durch komplementäre Wichtung gemäss der linearen Gleichung

$$V_j = k_{1j} \cdot M_1 + k_{2j} \cdot M_2 + \ldots + k_{nj} \cdot M_n.$$

Für die Wichtungskoeffizienten $k_i$ gilt dabei, dass $0 \leq k_{ij} \leq 1$ und dass $k_{1j} + k_{2j} + \ldots + k_{nj} = 1$ ist. i steht für die spektralen Bereiche, j steht für die jeweilige Grundfarbe Blau, Rot oder Grün.

Für den in Fig. 11 am Beispiel der Grundfarbe Rot R dargestellten Fall vereinfacht sich diese Verknüpfungsvorschrift zu

$$V_{Rot} = k_{1Rot} \cdot M_1 + (1 - k_{1Rot}) \cdot M_2.$$

Durch Veränderung der Wichtungskoeffizienten wird der Messlichtanteil jeder Grundfarbe so bewertet, als ob er ein Filter mit einer anderen Filtercharakteristik passiert hätte. Die Erfassung von mindestens zwei eng benachbarten spektralen Bereichen innerhalb jeder Grundfarbe erlaubt somit eine Bewertung der Kopiervorlage N "aus Sicht" des Kopiermaterials P. Auf diese Weise kann durch geeignete Wahl der Wichtungskoeffizienten die Messung optimal an die spektralen Empfindlichkeit des verwendeten Kopiermaterials P angepasst werden, ohne die eingesetzten Filter tauschen zu müssen.

In den Fig. 12 und 13 ist das erfindungsgemässe Belichtungssteuerungsverfahren einem herkömmlichen Verfahren gegenübergestellt, bei dem die Messung nicht an die spektralen Empfindlichkeiten des verwendeten Kopiermaterials angepasst ist. Dazu stellt man eine Versuchsreihe mit fünf verschiedenen Typen von Kopiervorlagen N (Filmtypen) und einem Kopiermaterial P an. Jede Kopiervorlage beinhaltet eine Blendenreihe eines Graufeldes, die durch entsprechende Ueber-, Standard- und Unterbelichtungen erstellt werden können. Bei der Belichtung der jeweiligen Kopiervorlage N auf das Kopiermaterial P versucht man in Folge, die über-, standard- und unterbelichteten Vorlagen auf grau zu korrigieren. Dies wird einmal auf herkömmliche Art ohne Anpassung der Messung an die spektralen Empfindlichkeiten des Kopiermaterials durchgeführt und ein weiteres Mal nach dem erfindungsgemässen Verfahren. Die Ergebnisse können ausgewertet und die Farbdichteabweichungen in den sogenannten Farbkreis eingetragen werden. Der Radium des inneren Kreises in den Diagrammen beträgt jeweils 0,05 Dichteeinheiten, der des äusseren 0,2 Dichteeinheiten. Die Farbdichteabweichungen betragen beim herkömmlichen Verfahren des Standes der Technik bis zu 0,2 und mehr Dichteeinheiten, wie aus Fig. 12 ersichtlich ist. Die mit dem erfindungsgemässen Verfahren erzielbaren Abweichungen sind in Fig. 13 dargestellt und liegen alle innerhalb des inneren Kreises mit einem Radius von 0,05 Dichteeinheiten, was einer Reduktion der Abweichungen auf ein Viertel und sogar weniger entspricht.

Durch das erfindungsgemässe Belichtungssteuerungsverfahren und das erfindungsgemässe Farbkopiergerät wird den Erfordernissen und der unterschiedlichen spektralen Epfindlichkeiten verschieder verwendeter Kopiermaterialien auf einfache und optimale Weise Rechnung getragen. Die Bewertung der Kopiervorlage kann immer schnell an die geänderten spektralen Empfindlichkeiten des Kopiermaterials angepasst werden, ohne dabei die Messfilter jedesmal tauschen zu müssen. Die Lösung ist kostengünstig und einfach zubewerkstelligen und erlaubt überdies Flexibilität bezüglich des verwendeten Kopiermaterials.

## Patentansprüche

1. Verfahren zur Steuerung der Belichtung in einem fotografischen Farbkopiergerät, bei dem eine Kopiervorlage (N) in einer Anzahl von Abtastbereichen fotoelektrisch mit einer Messanordnung (4) abgetastet wird, dabei jeder Abtastbereich der Kopiervorlage (N) innerhalb jeder der drei Grundfarben (B, G, R) in mindestens zwei eng benachbarten spektralen Bereichen (s, t) von der Messanordnung (4) erfasst wird, und aus den auf diese Weise erhaltenen Messwerte ($M_i$) für jeden Abtastbereich den Farbdurchlässigkeiten oder Farbdichten der Kopiervorlage (N) in den drei Grundfarben entsprechende Farbauszugswerte ($V_j$, wobei j für Blau, Rot, Grün steht) bestimmt und aus diesen unter Berücksichtigung gegebener Kriterien die erforderlichen Kopierlichtmengen ermittelt werden, dadurch gekennzeichnet, dass die benachbarten spektralen Bereiche (s, t) durch Interferenzfilter (181), vorzugsweise dielektrische Bandpässe, festgelegt werden, und dass hinter den dielektrischen Bandpässen (181) eine Anzahl Detektoren derart angeordnet wird, dass sie verschiedene Winkelbereiche des durch den jeweiligen dielektrischen Bandpass hindurchtretenden Messlichtes und somit unterschiedliche spektrale Bereiche (s, t)innerhalb der jeweiligen Grundfarbe (B, G, R) erfassen.

2. Verfahren nach Patentanspruch 1, dadurch gekennzeichnet, dass die spektralen Charakteristiken der benachbarten spektralen Bereiche (s, t) überlappen.

3. Verfahren nach Patentanspruch 2, dadurch gekennzeichnet, dass die Maxima (k, m) der spektralen Charakteristiken unmittelbar benachbarter spektraler Bereiche (s, t) durch einen Abstand (a) getrennt sind, der etwa der Halbwertsbreite (b) der spektralen Bereiche (s, t) entspricht.

4. Verfahren nach Patentanspruch 3, dadurch gekennzeichnet, dass der Abstand (a) der Maxima etwa 5-35 nm, vorzugsweise etwa 20 nm, beträgt.

5. Verfahren nach einem der vorangehenden Patentansprüche, dadurch gekennzeichnet, dass die einzelnen Messwerte ($M_i$) durch komplementäre Wichtung zu den jeweiligen Farbauszugswerten ($V_j$) verknüpft werden.

6. Verfahren nach Patentanspruch 5, dadurch gekennzeichnet, dass die Verknüpfung der einzelnen Messwerte ($M_i$) gemäss der Gleichung

$$V_j = k_{1j} \cdot M_1 + k_{2j} \cdot M_2 + \ldots + k_{nj} \cdot M_n$$

erfolgt, wobei n die Anzahl der Messwerte ($M_i$) ist und $k_{ij}$ konstante Wichtungskoeffizienten sind, für die gilt, dass

$0 \leq k_{ij} \leq 1$ und dass $k_{1j} + k_{2j} + \ldots + k_{nj} = 1$ ist, und wobei j für die drei Grundfarben (B, G, R) steht.

7. Verfahren nach einem der vorangehenden Patentansprüche, dadurch gekennzeichnet, dass die eng benachbarten spektralen Bereiche (s, t) innerhalb jeder Grundfarbe (B, G, R) mit separaten Detektoren erfasst werden.

8. Fotografisches Farbkopiergerät mit einer Projektionsanordnung (1,2 3), um eine Kopiervorlage (N) auf lichtempfindliches Kopiermaterial (P) abzubilden, mit einer Messanordnung (4) zum bereichsweisen fotoelektrischen Abtasten der Kopiervorlage (N), welche im Strahlengang jeder Grundfarbe eine wellenlängenselektive Detektionseinrichtung (18) aufweist, die innerhalb jeder der drei Grundfarben (Blau B, Grün G, Rot R) mindestens zwei eng benachbarte spektrale Bereiche (s, t) erfasst und in Messwerte ($M_i(1)$) umformt und mit Mitteln (5a) ausgestattet ist, welche die Messwerte ($M_i$) zu Farbauszugswerten ($V_j$) verknüpfen, die für jeden Abtastbereich den spektralen Empfindlichkeitsverläufen des Kopiermaterials (P) angepasst sind, und mit einer Belichtungssteuerungsanordnung, welche die Farbauszugswerte zur Festlegung der das Kopiermaterial (P) beaufschlagenden Kopierlichtmengen weiterverarbeitet und mit der Messanordnung (4) und der Projektionsanordnung (1, 2, 3) zusammenwirkt, dadurch gekennzeichnet, dass für jede Grundfarbe (B, G, R) je mindestens zwei separate fotoelektrische Detektoren (188) derart einem einzigen Interferenzfilter (181), vorzugsweise einem dielektrischen Bandpass, zugeordnet sind, dass jeder Detektor (188) einen anderen spektralen Bereich (s, t) innerhalb der jeweiligen Grundfarbe (B, G, R) erfasst, wobei die Anordnung der fotoelektrischen Detektoren (184, 185, 189) derart gewählt ist, dass sie verschiedene Winkelbereiche des durch das Filter hindurchtretenden Messlichtes erfassen.

9. Kopiergerät nach Patentanspruch 8, dadurch gekennzeichnet, dass die Filter (181) Transmissionsfilter sind.

10. Kopiergerät nach Patentanspruch 9, dadurch gekennzeichnet, dass die die von den Detektoren innerhalb jeder Grundfarbe erfassten Transmissionsverläufe (s,t) überlappen.

11. Kopiergerät nach Patentanspruch 10, dadurch gekennzeichnet, dass die Transmissionsmaxima (k, m) unmittelbar benachbarter Transmissionsverläufe (s,t) durch einen Abstand (a) getrennt sind, der etwa der Halbwertsbreite (b) der erfassten Transmissionsverläufe (s, t) entspricht.

12. Kopiergerät nach Patentanspruch 11, dadurch gekennzeichnet, dass der Abstand (a) der Transmissionsmaxima etwa 5-35 nm, vorzugsweise etwa 20 nm, beträgt.

13. Kopiergerät nach einem der Patentansprüche 8-12, dadurch gekennzeichnet, dass die fotoelektrischen Detektoren (184, 185, 189) in konzentrischen Bereichen angeordnet sind.

## Claims

1. A process for controlling the exposure in a photographic colour copying apparatus, in the case of which a number of scanning areas on a copying master (N) are scanned photoelectrically by a measuring arrangement (4), each scanning area of the copying master (N) being detected by the measuring arrangement (4) in at least two closely adjacent spectral ranges (s, t) within each of the three primary colours (B, G, R), and colour extract values ($V_j$, j being blue, red, green) corresponding to the colour permeabilities or colour densities of the copying master (N) in the three primary colours are determined from the measured values ($M_i$), so obtained, for each scanning area, and the necessary quantities of copying light are determined from those colour extract values, taking given criteria into account, wherein the adjacent spectral ranges (s, t) are determined by interference filters (181), preferably dielectric bandpass filters, and a number of detectors are so arranged behind the dielectric bandpass filters (181) that they detect various angular ranges of the measuring light passing through the particular dielectric bandpass filter and accordingly different spectral ranges (s, t) within the particular primary colour (B, G, R).

2. A process according to patent claim 1, wherein the spectral characteristics of the adjacent spectral ranges (s, t) overlap.

3. A process according to patent claim 2, wherein the maxima (k, m) of the spectral characteristics of directly adjacent spectral ranges (s, t) are separated by a distance (a) corresponding to approximately the half-value width (b) of the spectral ranges (s, t).

4. A process according to patent claim 3, wherein the separation (a) of the maxima amounts to about 5 to 35 nm, preferably about 20 nm.

5. A process according to any one of the preceding patent claims, wherein the individual measured values

7

($M_i$) are combined by complementary weighting into the respective colour extract values ($V_j$).

6. A process according to patent claim 5, wherein the combining of the individual measured values ($M_i$) is effected in accordance with the equation

$$V_j = k_{1j} \cdot M_1 + k_{2j} \cdot M_2 + ... + k_{nj} \cdot M_n$$

wherein n is the number of the measured values ($M_i$) and $k_{ij}$ are constant weighting coefficients and wherein $0 \leqq k_{ij} \leqq 1$ and $k_{1j} + k_{2j} + ... + k_{nj} = 1$ with j representing the three primary colours (B, G, R).

7. A process according to any one of the preceding patent claims, wherein the closely adjacent spectral ranges (s, t) within each primary colour (B, G, R) are detected by separate detectors.

8. A photographic colour copying apparatus having a projection arrangement (1, 2, 3) for imaging a copying master (N) onto photosensitive copying material (P), having a measuring arrangement (4) for photoelectrically scanning the copying master (N) area by area, which measuring arrangement comprises a wavelength-selective detection device (18) which is disposed in the beam path of each primary colour and detects at least two closely adjacent spectral ranges (s, t) within each of the three primary colours (blue B, green G, red R) and converts them into measured values ($M_i$(1)) and is equipped with means (5a) which combine the measured values ($M_i$) into colour extract values ($V_j$) which, for each scanning area, are adapted to the spectral sensitivity variations of the copying material (P), and having an exposure control arrangement which further processes the colour extract values in order to determine the quantities of copying light falling on the copying material (P) and co-operates with the measuring arrangement (4) and the projection arrangement (1, 2, 3), wherein, for each primary colour (B, G, R), at least two separate photoelectric detectors (188) are so associated with a single interference filter (181), preferably a dielectric bandpass filter, that each detector (188) detects a different spectral range (s, t) within the particular primary colour (B, G, R), the arrangement of the photoelectric detectors (184, 185, 189) being so chosen that they detect various angular ranges of the measuring light passing through the filter.

9. A copying apparatus according to patent claim 8, wherein the filters (181) are transmission filters.

10. A copying apparatus according to patent claim 9, wherein the transmission variations (s, t) detected by the detectors within each primary colour overlap.

11. A copying apparatus according to patent claim 10, wherein the transmission maxima (k, m) of directly adjacent transmission variations (s, t) are separated by a distance (a) corresponding to about the half-value width (b) of the transmission variations (s, t) detected.

12. A copying apparatus according to patent claim 11, wherein the separation (a) of the transmission maxima amounts to about 5 to 35 nm, preferably about 20 nm.

13. A copying apparatus according to any one of patent claims 8 to 12, wherein the photoelectric detectors (184, 185, 189) are located in concentric areas.

## Revendications

1. Procédé pour commander l'exposition dans une tireuse photographique en couleurs, selon lequel un original transparent à copier (N) est exploré par voie photoélectrique en un certain nombres de zones d'exploration, au moyen d'un système de mesure (4), exploration au cours de laquelle chaque zone d'exploration de l'original (N) est saisie, à l'intérieur de chacune des trois couleurs fondamentales (B, G, R), en au moins deux domaines spectraux (s, t) étroitement voisins par le système de mesure (4), les transparences aux couleurs ou densités colorimétriques de l'original (N) sont déterminées à partir des valeurs de mesure ($M_i$) obtenues de cette manière pour chaque zone d'exploration, sous la forme de valeurs des composantes trichromatiques ($V_j$, où j représente bleu, rouge, vert) correspondant aux trois couleurs fondamentales et, à partir de ces valeurs des composantes trichromatiques, sont déterminées, en tenant compte de critères donnés, les quantités de lumière de tirage nécessaires, caractérisé en ce que les domaines spectraux voisins (s, t) sont fixés par des filtres interférentiels (181), de préférence des filtres passe-bande diélectriques, et en ce que, derrière les filtres passe-bande diélectriques (181), un certain nombre de détecteurs sont disposés de manière qu'ils détectent ou saisissent différentes plages angulaires de la lumière de mesure traversant le filtre passe-bande diélectrique concerné et saisissent par conséquent différents domaines spectraux (s, t) à l'intérieur de la couleur fondamentale (B, G, R) correspondante.

2. Procédé selon la revendication 1, caractérisé en ce que les caractéristiques spectrales des domaines spectraux voisins (s, t) se recouvrent.

3. Procédé selon la revendication 1, caractérisé en ce que les maxima (k, m) des caractéristiques spectrales de domaines spectraux directement voisins (s, t) sont séparés d'une distance (a) correspondant à peu près à la largeur de valeur moyenne (b) des domaines spectraux (s, t).

4. Procédé selon la revendication 3, caractérisé en ce que la distance (a) des maxima est d'environ 5 - 35 nm, de préférence d'environ 20 nm.

5. Procédé selon une des revendications précédentes, caractérisé en ce que les différentes valeurs de mesure ($M_i$) sont combinées par pondération complémentaire pour donner les valeurs des composantes trichomatiques ($V_j$) correspondantes.

6. Procédé selon la revendication 5, caractérisé en ce que la combinaison des différentes valeurs de mesure ($M_i$) s'effectue selon l'équation

$$V_j = k_{1j} \cdot M_1 + k_{2j} \cdot M_2 + ... + k_{nj} \cdot M_n$$

dans laquelle n est le nombre des valeurs de mesure ($M_i$) et $k_{ij}$ sont des coefficients de pondération constants pour lesquels
$0 \leq k_{ij} \leq 1$ et $k_{1j} + k_{2j} + ... + k_{nj} = 1$, et dans laquelle j désigne les trois couleurs fondamentales (B, G, R).

7. Procédé selon une des revendications précédentes, caractérisé en ce que les domaines spectraux étroitements voisins (s, t) à l'intérieur de chaque couleur fondamentale (B, G, R) sont saisis au moyen de détecteurs séparés.

8. Tireuse photographique en couleurs, comprenant un système de projection (1, 2, 3) pour reproduire un original transparent à copier (N) sur du matériau de tirage photosensible (P), un système de mesure (4) pour explorer l'original (N) par voie photoélectrique, zone par zone, système de mesure qui présente, dans la marche des rayons de chaque couleur fondamentale, un dispositif de détection (18) sélectif en longueur d'onde, lequel détecte ou saisit à l'intérieur de chacune des trois couleurs fondamentales (bleu B, vert G et rouge R) au moins deux domaines spectraux étroitements voisins (s, t) et les transforme en valeurs de mesure ($M_i(1)$), et est équipé de moyens (5a) qui combinent les valeurs de mesure ($M_i$) en valeurs de composantes trichromatiques ($V_j$) qui, pour chaque zone d'exploration, sont adaptées aux courbes de sensibilité spectrale du matériau de tirage (P), ainsi qu'un système de commande d'exposition effectuant un traitement consécutif sur des valeurs des composantes trichromatiques pour fixer les quantités de lumière de tirage à appliquer au matériau de tirage (P) et coopérant avec le système de mesure (4) et le système de projection (1, 2, 3), caractérisée en ce que, pour chaque couleur fondamentale (B, G, R), au moins deux détecteurs photoélectriques séparés (188) sont coordonnés à un seul filtre interférentiel (181), formé de préférence par un filtre passe-bande diélectrique, de manière que chaque détecteur (188) détecte ou saisisse un autre domaine spectral (s, t) à l'intérieur de la couleur fondamentale concernée (B, G, R), les détecteurs photoélectriques (184, 185, 189) étant agencés de manière qu'ils détectent différentes plages angulaires de la lumière de mesure traversant le filtre.

9. Tireuse selon la revendication 8, caractérisée en ce que les filtres (181) sont des filtres de transmission.

10. Tireuse selon la revendication 9, caractérisée en ce que les courbes de transmission (s, t) relevées par les détecteurs à l'intérieur de chaque couleur fondamentale se recouvrent.

11. Tireuse selon la revendication 10, caractérisée en ce que les maxima de transmission (k, m) de courbes de transmission (s, t) directement voisines sont séparés d'une distance (a) correspondant à peu près à la largeur de valeur moyenne (b) des courbes de transmission (s, t) relevées.

12. Tireuse selon la revendication 11, caractérisée en ce que la distance (a) des maxima de transmission est d'environ 5 - 35 nm, de préférence d'environ 20 nm.

13. Tireuse selon une des revendications 8 - 12, caractérisée en ce que les détecteurs photoélectriques (184, 185, 189) sont disposés en zones concentriques.

Fig. 1

Fig. 3

10

**Fig. 2**

Fig. 4

Fig. 5

**Fig. 6**

**Fig. 7**

**Fig. 8**

## Fig. 9

WELLENLÄNGE λ (nm) ⟶

B   G   R

WELLENLÄNGE λ (nm)

Fig. 10

R

k   a   m

s   b   t

580  600  620  640  660  680  700  720  740  760  780

WELLENLÄNGE λ (nm)

Fig. 11

15

_Fig. 13_

_Fig. 12_